# EUROPEAN PATENT APPLICATION

(11) **EP 2 568 205 A2**
(43) Date of publication of application: **13.03.2013**
(21) Application number: 12006247.6
(22) Date of filing: 05.09.2012
(51) Int. Cl.: F16L 11/04

(54) **Plastic pipe, pipe system and aircraft comprising a pipe system**

(30) Priority: 08.09.2011 US 201113227810
(71) Applicant: Apparatebau Gauting GmbH, 82131 Gauting (DE)
(72) Inventor: Zerbes, Ingo, 81739 München (DE); Wollenweber, Ulrich, 86529 Schrobenhausen (DE)
(74) Representative: Diehl Patentabteilung

(57) **Abstract**

The invention is directed to a plastic pipe (1) comprising a tubular body (2) adapted for guiding through a fluid having at least one of a liquid and solid phase, the tubular body comprising a pipe wall implemented in solid-material essentially made from at least one of a polyetherketone, polyetherimide, polyphenylene sulfide and polyoxymethylene type plastic material, wherein the plastic pipe comprises at least one attachment flange (4) which is attached and connected to an end-section (5) of the tubular body and comprises at least one outer radial protrusion (7).

## Description

Plastic pipe, pipe system and aircraft comprising a pipe system.

The invention is directed to a plastic pipe, a pipe system comprising at least one plastic pipe, and an aircraft comprising such a pipe system.

Plastic pipes and pipe systems comprising plastic pipes are generally known in the art. However, special requirements, as for example in aviation, may obviate the use of common plastic pipes and respective pipe systems.

As to aviation, pipes and pipe systems have to fulfil comparatively strict requirements. As an example, waste water pipes and respective pipe systems are required to have sufficient mechanical strength in order to be used in connection with vacuum sewage systems used in aircrafts. Beyond that, general requirements related to fire resistance and so on have to be met as well. As a consequence, common vacuum sewage pipes in aircrafts are made from metals, in particular light metals. These materials generally show sufficient mechanical strength and resistance vis-á-vis high and low pressures. However, one disadvantage is that they are comparatively heavy-weighted.

Hence, it is one of the objects of the invention to provide a pipe and pipe system that can be used with aircrafts, show sufficient mechanical and/or chemical resistance in particular for fresh water, waste water, in particular vacuum sewage, fuel applications, coolant fluid applications or transport of other liquids and are comparatively light-weight.

A further object of the invention is to provide a pipe and pipe system that can be used with aircrafts, are easy to manufacture and can be easily mounted and dismounted.

An other object of the invention is to provide a pipe and pipe system, in particular for aircrafts, which, at least in parts, can substitute common pipes and pipe systems without requiring substantial customizations and modifications in existing systems.

These objects in particular are obtained by a plastic pipe, a pipe system and an aircraft comprising such a pipe system as set out in the claims.

According to a first aspect of the invention, a plastic pipe, line, tube or conduit is provided. The plastic pipe comprises a tubular body adapted to guiding through a fluid having at least one of a gaseous and liquid phase. The tubular body comprises a pipe wall implemented in solid-material essentially made from a plastic material comprising as a main component at least one of a type of polyetherketone, polyetherimide, polyphenylene sulfide and polyoxymethylene.

In general, other plastic materials appropriate for aviation may be used as well.

The mentioned plastic materials are also known under the abbreviations PEEK and similar materials such as PEAK, PEEK, PEEEK, PEEKEK, PEKK, as well as PEI, PPS, and POM. The pipe wall may be single-walled. However, for specific applications, such as fuel ductings, the pipe wall may be double-walled or even multiple-walled.

The tubular body may be made in an extrusion-type manufacturing process. In this case, plastic pipes of nearly any length, in particular lengths of up to 15 m to 20 m, can be manufactured.

The proposed plastic pipe comprises at least one attachment flange which is attached and connected to an end-section of the tubular body, wherein the at east one attachment flange comprises at least one outer radial protrusion.

The at least one radial protrusion may protrude from the tubular section by about 2 mm to 8 mm, preferably about 3 mm.

Providing such types of attachment flanges, i. e. attachment flanges that can be mounted and connected to the tubular body leads to more flexibility in producing ductings of varying design. Moreover, if the plastic pipe is used as a replacement pipe for known metal pipes, for example, attachment flanges can be freely selected according to respective needs.

In addition, providing an attachment flange as a separate part leads to enhanced mechanical stability in the end section of the plastic pipe, which is advantageous as plastic pipes generally are interconnected, as well as attached and/or clamped at the end-sections.

The inventors have found out, that - in contrast to the known use of polyetherketone type plastics as outer or inner coatings on pipes made from composite materials, such as resin-impregnated fibre fabrics - plastics of the above mentioned types, are well suitable for producing high quality pipes having sufficient mechanical and/or chemical resistance for use in aviation applications such as fresh-water lines, waste water lines, sewage lines, in particular vacuum sewage lines, fuel lines, coolant liquid lines or transport of further liquids.

In particular, the proposed plastic pipes, particularly the pipe walls have satisfactory mechanical strength and stability to be used in pipe systems or ducting systems for guiding through fluids having at least one of a liquid and solid phase.

As an example, but without restricting the scope of invention, the fluid may be a liquid such as water, in particular fresh water, grey water or waste water, or a liquid fuel; a gas-liquid mixture, a liquid-solid mixture or a gas-liquid-solid mixture comprising respectively gas, liquid and solid particles or solid matter.

The proposed plastic pipe is very versatile and has a broad range of application, in aviation. The proposed plastic pipe, in particular respective plastic pipes with comparative thin-walled pipe walls, are light-weight as compared to metal pipes, and therefore the plastic pipe is well suitable for aviation and aerospace applications. A further advantage is that the mentioned plastic materials at least in part are already approved for aviation and aerospace use.

A further advantage, as compared to polyetherketone coated pipe walls from composite materials is that the number of production steps for producing the pipe can be reduced. As a consequence, manufacturing costs can be reduced.

In one embodiment of the plastic pipe, at least in a mid-section of the tubular body, a thickness of the pipe wall lies in a range between 1.3 mm and 1.8 mm. Preferred further ranges of thickness of the pipe walls lie between 1.4 mm and 1.6 mm. In particular it is possible that the thickness amounts about 1.5 mm or 1.7 mm. Note that the thickness shall mean the thickness in radial direction of the pipe, i. e. perpendicular to the axial direction of the pipe.

The term mid-section in particular shall mean a plastic pipe section extending in axial direction between flanges provided at opposite ends of the plastic pipes for example. Sections lying outside or adjacent the mid-section can be referred to as end-sections. As will be discussed further below, the end-sections can be used to attach attachment flanges.

Plastic pipes having pipe wall thicknesses in the aforementioned ranges are comparatively light weight. Results have shown that they are stable enough and show sufficient mechanical strength to withstand inner and outer pressures of at least 1.0 bar, which is a minimum requirement for pipes and ducts in aerospace sewage applications.

It has been found out by the inventors, that plastic pipes having wall thicknesses of about or in the range of about 1.7 mm even withstand outer pressures of at least 1.3 bar and inner pressures of at least 20 bar, for example.

It shall be noted, that plastic pipes having wall thicknesses in the above mentioned ranges are in particular suitable for vacuum sewage, in particular for aerospace applications.

In a further embodiment of the plastic pipe, the thickness of the pipe wall, at least in the mid-section thereof, varies by 0.2 mm at the most. Here it shall be mentioned, that the inventors found out, that polyetherketone type plastics allow the manufacture of thin-walled pipe walls having comparatively small variations in thickness. Small variations in thickness result in small variations in mechanical properties of the plastic pipe or pipe walls, respectively. This is a relevant factor for construction, design and dimensioning of the plastic pipe and pipe walls, respectively.

According to an embodiment of the plastic pipe, the tubular body is in the shape of a cylinder, in particular a right or regular cylinder. Such geometries can be easily manufactured, in particular at low costs.

The base area, or respectively the perimeter or profile, of the cylinder can have one of a circular, elliptic and polygonal shape.

In a further embodiment, the attachment flange is attached to at least one of the axial end-sections of the tubular body by at least one of a welded and adhesive joint.

Without limiting the scope of invention, the adhesive joint is preferably established between an inner surface of the tubular section of the attachment flange and an outer surface of the tubular body of the plastic pipe.

The attachment flange may be attached in an arrangement flush with a respective axial end of the tubular body. In particular, the attachment flange may be positioned and fixed such that the attachment flange does not project beyond the tubular body.

However, the attachment flange may also be attached such that an end edge of the tubular body abuts an inner abutment shoulder of the respective attachment flange.

In this case it is possible that the attachment flange protrudes beyond the tubular body in axial direction thereof.

Axial face sides or areas averted from the tubular body with respect to the axial direction thereof may be adapted and designed as abutment areas or abutment faces. Abutment areas or faces may be specially designed such that optimal abutment or axial alignment between adjacent pipes is obtained. Note that proper abutment or axial alignment may also be obtained by bushings or clamps interconnecting adjacent plastic pipes. Bushings, clamps and the like may engage respective radial protrusions of adjacent plastic pipes.

In order to fluid tightly connect adjacent plastic pipes one or more gaskets may be provided at least one of between bushings or clamps and respective attachment flanges and between axial face sides of adjacent plastic pipes.

The plastic pipe having separate attachment flanges attached thereto can be manufactured in a comparative easy way. As an example, the tubular body and attachment flanges can be separately manufactured, and then the attachment flanges can be pushed on or connected to respective ends of the tubular body. Attachment of the flanges to the tubular body of the plastic pipe can be accomplished by welding and/or adhesive bonding.

One advantage of using separate attachment flanges is, that different types of attachment flanges can be attached to the tubular body, in particular to tubular bodies of same or like design or dimensions. The types of attachment flanges can for example vary in size, in particular axial length of the tubular section; number and dimension of the protrusions; material and so on. This in turn enables the plastic pipe to be used in a broad field of application. In particular, shapes and dimensions of attachment flanges, in particular of their tubular sections, can be selected to match conventional pipes, if for example the proposed plastic pipe shall be used as substitute or replacement part for conventional pipes.

The at least one radial protrusion can be or make up a type of flange used for fluid tightly connecting adjacent pipes in a pipe system. Bushings, sleeves or fittings having recesses to engage the protrusions can be used for connecting adjacent pipes. The bushings, sleeves or fittings and/or the protrusions can comprise gadgets adapted and arranged for establishing fluid tight connections, i. e. for fluid-tightly connecting adjacent pipes.

The attachment flange may, as already mentioned, comprise an axial tubular section, on which the at least one radial protrusion is formed, and from which the radial protrusions protrude in radial direction. The cross section and/or inner perimeter of the tubular section preferably is adapted to match the cross section and/or outer perimeter of the tubular body.

The tubular section may have a thickness similar to that of the tubular body, such as for example in the rage from 1.3 mm to 1.8 mm. However, the thickness may be greater and for example lie in a range from about 2 mm to 8 mm, preferably from 4 mm to 6 mm.

Further it is preferred, that the tubular section is designed such that it can be tightly fitted to the tubular body of the plastic pipe, in particular to avoid additional gadgets between the tubular section and the tubular body.

The term "tubular" in "tubular section" shall be understood in general terms, in particular it shall mean that the tubular section has an axial extension suitable for implementing the radial protrusions thereon. Further, "tubular" shall not be restricted to circular cross sections. Instead, "tubular" shall allow also oval, polygonal, in particular rectangular, shaped axial cross sections.

As already stated, the attachment flange, in particular the tubular section, may be attached by adhesive bonding to a respective end-section of the tubular body of the plastic pipe. It is preferred, that that the attachment flange is attached in an arrangement flush with a respective axial end of the tubular body or such that an end edge of the tubular body abuts an inner abutment shoulder of the respective attachment flange. The adhesive bond may be established between an inner surface of the tubular section and an outer surface of the tubular body.

The attachment flange, in particular the tubular section, may, in the alternative or additionally, be attached by adhesive bonding to a respective end-section of the tubular body of the plastic pipe. It is preferred, that that the attachment flange is attached in an arrangement flush with a respective axial end of the tubular body or such that an end edge of the tubular body abuts an inner abutment shoulder of the respective attachment flange. The welded joint may be established at any suitable location on the attachment flange, tubular section and tubular body, in particular between an inner surface of the tubular section and an outer surface of the tubular body.

In particular in the welded embodiment, the tubular section of the attachment flange shall have the same dimension as the tube to ensure that the tubular body and attachment flange fit or can be fitted firmly.

The radial height and axial width of the abutment shoulder provided on an inner section of the attachment flange is preferably selected such that tubular body and attachment flange fit firmly and sufficient mechanical strength is secured.

The attachment flange itself may be made of a similar or essentially the same material as the pipe wall. In particular, the attachment flange may be made from at least one of a polyetherketone, polyetherimide, polyphenylene sulfide and polyoxymethylene type plastic material.

In another embodiment, the pipe wall comprises heating elements adapted for heating at least sections of the tubular body. The heating elements can be at least one of attached on and embedded in the pipe wall. Heating elements as proposed can be used in sections in which freezing of fluids, in particular liquids, may occur. The heating elements can for example be implemented as heating strands and/or heating mats and/or heating wires. As mentioned above, the plastic pipes, in more detail the tubular body, can be manufactured by extrusion. Extrusion is even possible when heating elements are to be embedded in the pipe walls.

A second aspect of the invention is directed to a pipe system comprising at least one plastic pipe according to the first aspect of the invention, in particular according to any embodiment of the plastic pipe and combinations thereof, in particular any embodiments of the plastic pipe described above and further below.

The pipe system my be an aircraft pipe system and adapted to guiding through water, in particular fresh or waste water, sewage, liquid fuel, coolant liquid or transporting further or other liquids.

In more detail, the plastic pipe can comprise a tubular body adapted for guiding through a fluid having at least one of a gaseous and liquid phase. The tubular body may comprise a pipe wall which may be single-walled, double-walled or multiple-walled and which is implemented in solid-material essentially made from at least one of a polyetherketone, polyetherimide, polyphenylene sulfide and polyoxymethylene type plastic material, as already described further above.

Further, at least one end-section of the tubular body comprises an attachment flange attached and connected thereto, which attachment flange comprises at least one outer radial protrusion. In addition, the plastic pipe at an end-section thereof and an adjacent pipe or element of the pipe system are fluid-tightly connected via the attachment flange.

Note that fluid tight connections between the pipe system and other pipes or elements to be connected to the pipe system may be established at respective branch connectors of the pipe system, preferably provided between end-sections of one of the pipes of the pipe system, for example.

As to advantages and advantageous effects of the pipe system according to the second aspect, reference is made to the description and statements given in connection with the first aspect of the invention.

The pipe system can advantageously be used for aerospace applications, i. e. aircraft pipe systems. In particular, the pipe system according to the second aspect can be or constitute a part of an aircraft an aircraft fresh water ducting, an aircraft waste water ducting, an aircraft sewage ducting, in particular vacuum sewage ducting or coolant liquid ducting. Moreover, the pipe system can be or be a part of an aircraft fuel line or ducting. In more general terms, the pipe system according to the second aspect can constitute an aircraft pipe system adapted and configured for guiding through a fluid of at least one of liquid and solid phase.

It shall be noted that the term "fluids of liquid phase" shall not be restricted to liquids as such, but also comprise fluids comprising certain amounts of gases and/or solid particles/objects.

The attachment flange may be attached flush with the respective end section or such that an end edge of the tubular body abuts an inner abutment shoulder of the respective attachment flange. Further reference is made to respective description in connection with the first aspect of the invention.

Adjacent pipes of the pipe system preferably are fluid-tightly connected by pipe fittings fluid-tightly engaging respective flanges, in particular radial protrusions of the attachment flange(s). Reference is also made to the description above.

In a further embodiment, at least in a mid-section of the tubular body of the plastic pipe, a thickness of the pipe wall lies in a range between 1.3 mm and 1.8 mm, preferably 1.7 mm, preferably between 1.4 mm and 1.6 mm, preferably amounts about 1.5 mm.

The tubular body may, and according to the findings of the inventors can, be designed, such that at least in the mid-section thereof, the thickness of the pipe wall varies by 0.2 mm at the most. Reference is also made to the description above.

The attachment flange may be attached to the tubular body by at least one of an adhesive and welded joint. Reference is made to the description above which applies in case of the pipe system mutatis mutandis.

Further, a tubular section of the attachment flange of the at least one plastic pipe may have a thickness lying in the range of the thickness of the pipe wall of the tubular body. However, the thickness may be greater than that and lie in the range from about 2 mm to 6 mm, preferably 3 mm to 5 mm. The radial protrusion of the attachment flange may protrude from the tubular section by about 3 mm to 5 mm.

In general, the attachment flange, of the at least one plastic pipe can be made from any suitable material, in particular plastics, metals and the like. However it is preferred that the flanges be made from a similar or the same, in particular essentially the same material as the pipe wall of the plastic pipe, i. e. from at least one of a polyetherketone, polyetherimide, polyphenylene sulfide and polyoxymethylene type plastic material.

In a further embodiment of the pipe system, the pipe wall of the at least one plastic pipe may comprise heating elements adapted for heating at least sections of the respective tubular body, which heating elements are at least one of attached on and embedded in the pipe wall. Reference is also made to the description above. Heating elements may have contact elements and be designed such that electric connection of heating elements of adjacent plastic pipes is automatically established upon interconnecting respective pipes.

The pipe system may further comprise an electronic control unit connected to the heating elements and adapted to control their operational state, in particular heating power. The electronic control unit may be connected to one or more sensors, in particular temperature sensors, arranged and adapted to sense parameters relevant for operating the heating elements.

As an example, a temperature sensor may be provided in order to detect the temperature of a fluid guided through the pipe system or the temperature prevailing within the plastic pipe. In case that the sensed temperature is below a critical temperature, the electronic control unit can activate the heating elements, whereas in case that the sensed temperature is above a critical temperature, the electronic control unit may deactivate the heating element. A similar operation of the electronic control unit may be applied for other parameters and respective sensors.

The pipe system in particular is suitable and adapted for guiding through liquids, in particular fresh water, grey water, waste water, fuels or other liquids in aerospace applications.

A third aspect of the invention is directed to an aircraft comprising a pipe system according to the second aspect of the invention, in particular including, but not restricted to all the embodiments of the pipe system of the second aspect. Respective plastic pipes of the pipe system may be implemented as described in connection with the first aspect of the invention, including any embodiments and any combinations thereof.

In more detail, the aircraft comprises a pipe system with at least one plastic pipe having a tubular body adapted for guiding through a fluid having at least one of a liquid and solid phase. As to the term fluid the description above applies mutatis mutandis.

The tubular body comprises a, single-walled, double walled or multiple-walled pipe wall implemented in solid-material essentially made from at least one of a polyetherketone, polyetherimide, polyphenylene sulfide and polyoxymethylene type plastic material.

The plastic pipe of the aircraft pipe system comprises at least one attachment flange which is attached and connected to an end-section of the tubular body of the plastic pipe and which comprises at least one outer radial protrusion used for interconnecting with adjacent pipes

In accordance with the second aspect of the invention, the pipe system applied in the third aspect of the invention is adapted and may be used for guiding through aircraft related liquids, such for example fresh water, grey water, waste water, or fuels, coolant liquids or cooling liquids. As to advantages and advantageous effects, reference is made to the description in connection with the first and second aspect of the invention.

Preferred embodiments of the invention will now be described in connection with the annexed figures, in which:
- Fig. 1: shows in a perspective view a plastic pipe according to the first aspect of the invention;
- Fig. 2: shows a cross-sectional view of an end-section of the plastic pipe;
- Fig. 3: shows a detail of Fig. 2
- Fig. 4: shows a side-view of a the plastic-pipe;
- Fig. 5: shows a detail of a pipe system comprising several plastic pipes according to fig. 1 and 2; and
- Fig. 6: shows an aircraft comprising a pipe system.

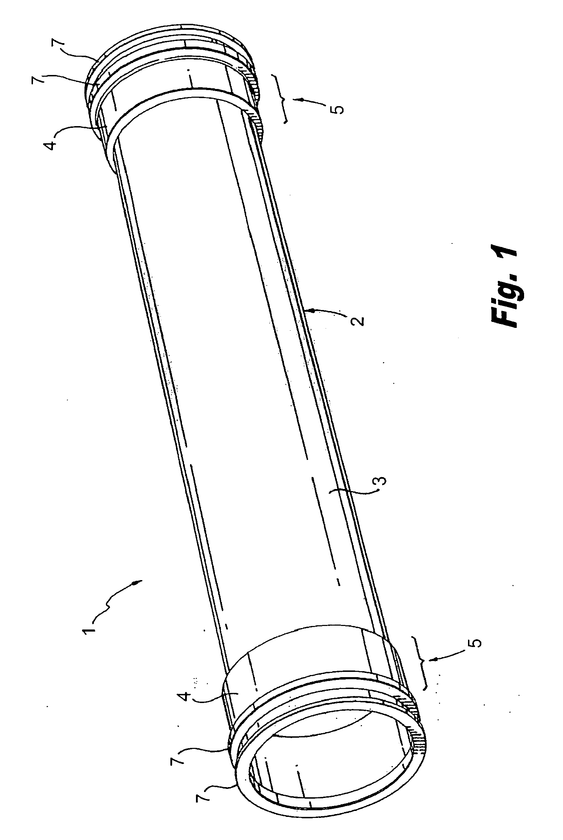

Fig. 1 shows a perspective view of a plastic pipe 1. The plastic pipe 1 comprises a tubular body 2. The plastic pipe 1 of the preferred embodiment is intended for a vacuum sewage pipe system of an aircraft, which will be described later. However, the mentioned intended use of the plastic pipe 2 shall not limit the scope of the invention. In particular, plastic pipes as set out herein can be used for any purpose as set out further above and below, in particular for guiding through fresh water, waste water, liquid fuel, cooling liquid and the like.

For the intended use mentioned beforehand, the tubular body 2 is adapted for guiding through a sewage fluid, in particular waste fluid of an aircraft sanitary system. Sewage fluids generally comprise gas, liquid and/or solid matter. For this reason the plastic pipe 1 is gas-tight and liquid-tight for the fluids to be guided therethrough.

The tubular body 2 comprises a thin-walled pipe wall 3. The pipe wall 3 in the present case is single-walled. The present pipe wall 3 is implemented in solid material and essentially consists of, i. e. is made from, a polyetherketone type plastic material. Polyetherketone plastics are thermoplastic resins, exemplary representatives of which are also known under the abbreviation designations PEAK, PEEK, PEEEK, PEEKEK and PEKK. The pipes can be manufactured in a simple and cost effective way as compared to conventional pipes from metals or composite materials having inner coatings of PEEK, for example.

The proposed plastic material as such provides sufficient gas- and/or liquid tightness, in particular for the intended use in vacuum sewage lines. For example, the tubular body 2 may have a pipe wall 3 with a pipe wall thickness D0 in a range between 1.3 mm and 1.8 mm, preferably in a range between 1.4 mm and 1.6 mm.

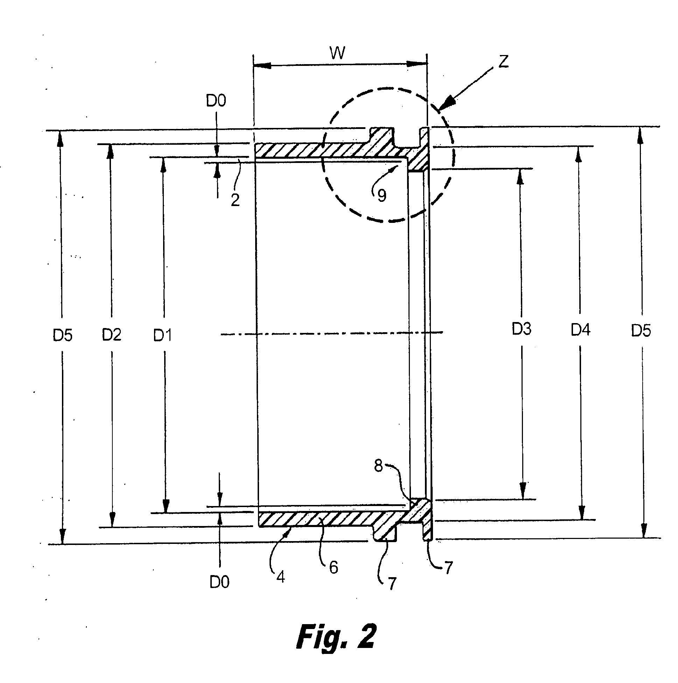

It has been shown, that the mentioned pipe wall thickness D0 (see Fig. 2) provides sufficient gas- and/or liquid tightness. Further, it has been shown that plastic pipes 1 having respective pipe walls 3 show sufficient mechanical stability to withstand loads, impacts and vacuum pressures typically occurring in aircraft vacuum sewage systems.

If the plastic pipe is used for other purposes, for example in non-vacuum sewage lines, in fuel lines, in fresh water lines and the like, the pipe walls 3 may be constructed to withstand inner and outer pressures according to certain regulations in the field. For example, for aerospace applications, sewage pipes or ducts have to withstand outer pressures of at least 1.3 bar. It has been shown, that pipe walls constructed according to the dimensions as given beforehand fulfil these requirements.

A positive side benefit of respective plastic pipes 1 is that they are comparatively light-weight, and therefore are particularly suitable for aerospace applications.

A further finding of the invention is that the plastic materials allow the manufacture of pipe walls 3 having comparatively low variations in the pipe wall thickness D0. Pipe walls 3 having the above-identified thickness values D0 can be manufactured with thickness variations of 0.2 mm at the most. These comparatively low variations are beneficial with respect to mechanical properties, in particular mechanical stability, of the plastic pipe 1, in particular the tubular body 2.

The plastic pipe 1 shown in the figures comprises a tubular body 2 which is in the shape of a regular cylinder having a circular shaped base area. Note that other axial cross sections are also conceivable. As the plastic material is, at least to some extent, elastic and flexible, the plastic pipe may be bent. However, it is also possible, to manufacture the plastic pipe in curved or arcuated form.

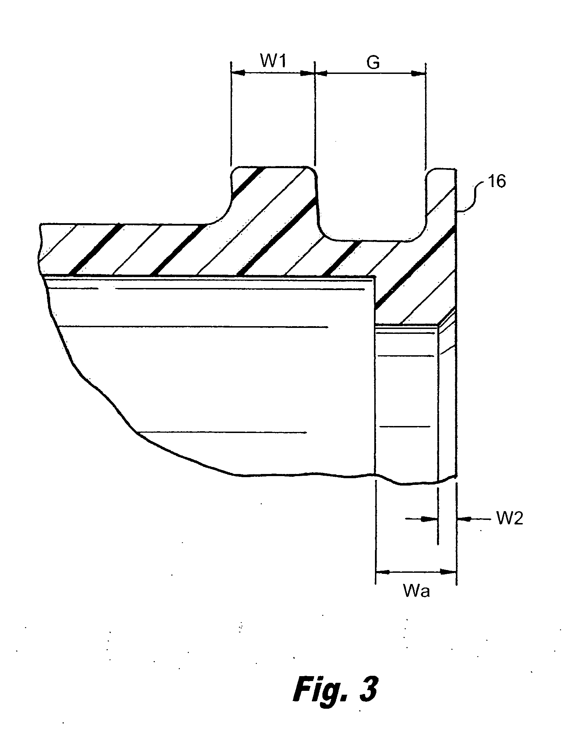

As can be seen from Fig. 1 and from Fig. 3 showing a side-view of the plastic pipe, the plastic pipe 1 also comprises two attachment flanges 4 attached at respective axial end-sections 5 of the tubular body 2 by adhesive bonding. Other methods of attaching the attachment flanges 4 to the tubular body 2 are possible, such as welding for example, which methods may be applied as alternatives or in addition to adhesive bonding, i. e. gluing. The method of attachment should be selected such that requirements relating to stability and strength of respective bonds can be obtained. For example, in sewage lines a requirement may be that a bond has a strength of 5 N/mm², which may and can be obtained by selecting a suitable adhesive, for example.

In the present example, the attachment flanges are manufactured from the same material as the tubular body 2. However, other types of materials can be used as well.

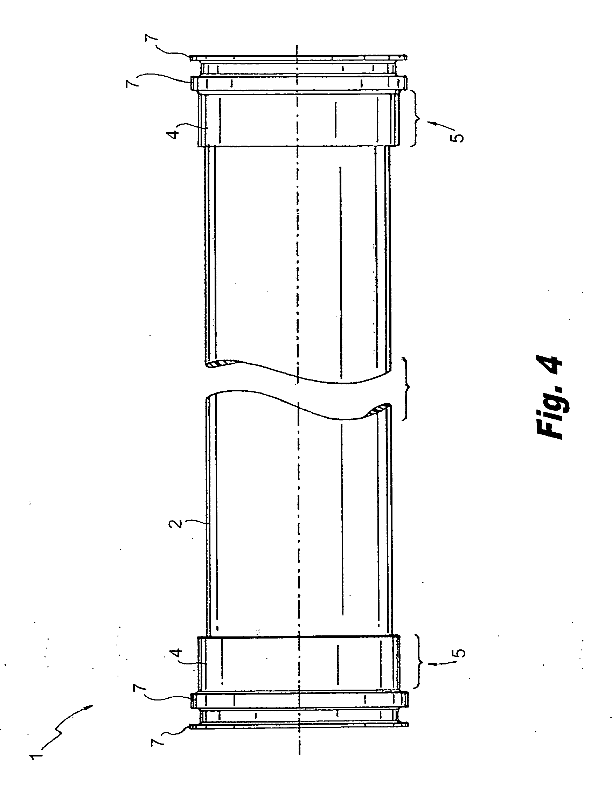

Details, in particular geometric dimensions, of the attachment flanges 4 will now be described with particular respect to Fig. 2 to 4. The attachment flange 4 comprises a cylindrical base 6 with two outer radial protrusions 7 protruding radially outward form the cylindrical base 6 and with one inner abutment shoulder 8 protruding radially inward from the cylindrical base 6. The abutment shoulder 8 is designed as a step reducing the inner diameter of the cylindrical base 6 in the region of an end face of the attachment flange 4. It goes without saying that geometric details and designs of elements of the plastic pipe and pipe system may be selected in accordance with existing aircraft standards without leaving the scope of the present invention.

First to fifth cross-sectional dimensions depicted in Fig 2. by reference signs D1 to D5 are as follows: an inner diameter of the cylindrical base 6, i. e. D1, is about 50.6 mm; an outer diameter of the cylindrical base 6, i. e. D2, is about 54.7 mm; an inner diameter of the section comprising the abutment shoulder 8, i. e. D3, is about 47 mm; an outer diameter of the section between the outer radial protrusions 7, i. e. D4, is about 53.1 mm; an outer diameter of the sections comprising the outer radial protrusions 7, i. e. D5, is about 58.5 mm.

Note that the outer dimensions, i. e. respective outer diameters, D2, D4 and D5 can be varied according to respective needs, however, for the given inner diameter D1, essentially corresponding to the outer dimension of the tubular body 2, respective outer dimensions have proven adequate for the intended use of the plastic pipe 1.

As already mentioned, the inner diameter D1 of the cylindrical base 6 essentially corresponds to the outer dimension of the tubular body 2. Respective diameters are selected such that the attachment flanges 4 can be pushed onto the tubular body 2 and attached thereto by adhesive bonding to finally obtain a connection that is sufficiently gas and liquid tight.

The abutment shoulder 8 projects inwardly, reducing the inner diameter D1 of the cylindrical base 6 to the diameter D3, resulting in a step providing an axial abutment farce 9 for the axial face side of the tubular section 2.

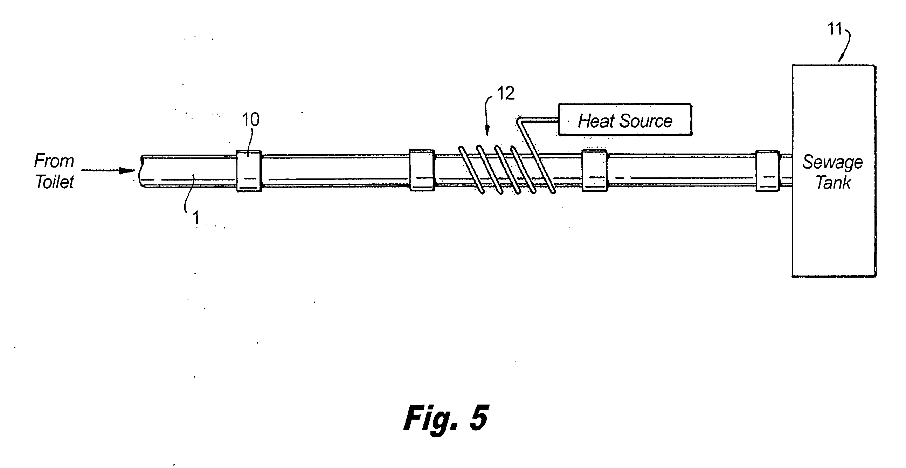

The outer diameters D4 and D5, i. e. the radial heights of the outer radial protrusions 7, as well as the axial widths of the outer radial protrusions 7 are selected such pipe-to-pipe connections are sufficiently robust and fulfil respective tightness requirements. The attachment flanges 4 are designed such that two plastic pipes 1 facing, or even abutting, each other at outer axial face sides of the attachment flanges 4 can be gas and liquid tightly connected by means of a pipe fitting 10 (see Fig. 5).

Fig. 3 shows details of the attachment flange 4, in particular of the outer radial protrusions 7. Relevant dimensions in particular in connection with the outer radial protrusions 7 are as follows: a first width W1 of one of the left-hand protrusion 7 in Fig. 3 is about 4.5 mm and a second width W2 of the right-hand protrusion 7 in Fig. 3 is about 1 mm. A gap G between the both protrusions is about 4.2 mm. An axial width Wa of the shoulder 8 may be about 3 mm. A distance between an axial end-face 16 of the attachment flange 4 and the left-hand protrusion 7 is about 5.2 mm. In particular such dimensions are particularly advantageous for obtaining fluid-tight connections between adjacent pipes 1 in a pipe system having several interconnected plastic pipes, as for example shown in connection with Fig. 5.

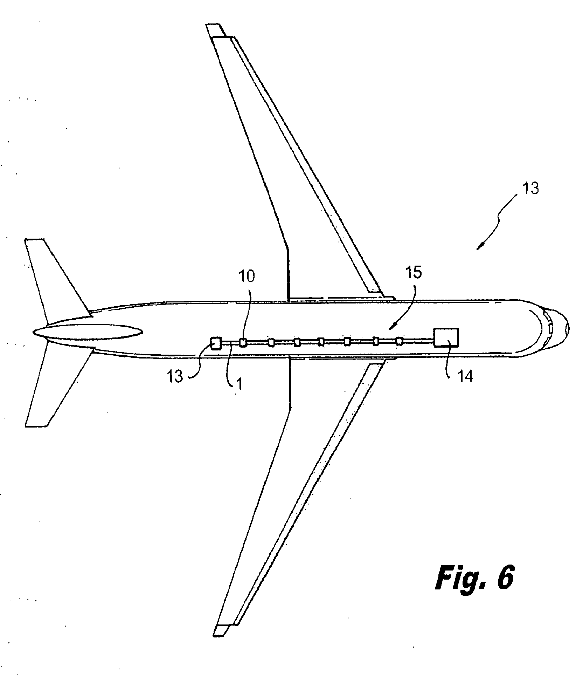

The Pipe system shown in Fig. 5 is a part of a vacuum sewage system of an aircraft (see Fig. 6) and comprises several plastic pipes 1 interconnected by respective pipe fittings 10. One end of the pipe system is connected to a sewage tank 11, while the other end may be connected to a toilet of an aircraft lavatory and/or respective components of respective vacuum sewage system. Note that pipe system of comparatively simple design is shown. More elaborate pipe systems may of course comprise several or multiple turns, branches terminal connections and so on. In particular, a pipe system for a fresh water or waste water line application may connect one or more tanks, loads, feeders and the like, with almost any desired branching.

A gas and liquid tight connection between adjacent plastic pipes 1 and/or other components of the pipe and/or sewage system may be obtained by gaskets positioned between the pipe fittings 10 and the attachment flanges 4. Each pipe fitting 10 may comprise two half-shells, for example, embracing in the assembled condition the attachment flanges 4, in particular the outer radial protrusions 7. And by excerting a pressing force on respective gaskets, attachment flanges 4 and related components, a fluid-tight connection between two successive pipes can be obtained. Note that axial end faces 16 of successive plastic pipes 1 may but need not abut against each other. Positioning the plastic pipes 1 in axial direction, in particular setting and fixing respective distances between adjacent plastic pipes 1, i. e. axial end faces, may be achieved by adequately setting the shape and design of the pipe fittings 10.

For demounting one plastic pipe 1 of the pipe system, for example, pipe fittings 10 at both ends of a plastic pipe 1 are to be removed. Then, the respective plastic pipe 1 can be pushed out sideways, i. e. in radial direction, perpendicular to the axial direction of the plastic pipe 1. Then a new or replacement plastic pipe 1 can be pushed in, in a corresponding radial motion. Pushing out and in the plastic pipe 1 in radial direction is possible as adjacent plastic pipes 1 as such are not directly engaged with each other. Rather, flat axial faces 16 of the attachment flanges 4 facing each other make it possible to push out even a single plastic pipe 1 without requiring other pipes or components, apart from respective pipe fittings 10, to be removed.

In Fig. 5, one exemplary representative of the plastic pipes 1 is provided with heating elements 12. The heating elements 12 may comprise heating wires and the like attached to the plastic pipe 1. The heating elements 12, which are only optional, are provided for heating at least the tubular body 2 of a respective plastic pipe 1. Heating elements 12 may provided in regions at least temporarily exposed to low temperatures causing liquids passing through the plastic pipe 1 to freeze. Heating elements 12 are of particular interest for sewage pipes, but also water pipes, that at least temporarily guide through aqueous liquids, because icing of respective pipe sections can at least greatly be prevented. A control unit and, if required temperature sensors (not shown), may be provided to control the operational state, e. g. the heating power, of the heating elements. The heating elements 12 may be embedded in the pipe walls 3 and/or, as already indicated, mounted or places on a surface of the plastic pipe 1.

Fig. 6 shows an aircraft 13 comprising a lavatory compartment 14 with a toilet, and a sewage tank 11. The lavatory compartment 14 may be placed on a passenger deck of the aircraft 13, while the sewage tank 11 may be placed below or behind the passenger deck, in a region of a cargo compartment of the aircraft 13, for example. The toilet is implemented as a vacuum flush toilet, and a vacuum sewage line 15, comprising one or more plastic pipes 1 and pipe fittings 10 as shown and described in connection with Fig. 1 to 4, i. e. comprising a pipe system as shown and described in connection with Fig. 5. Note that the plastic pipes 1 and pipe fittings 10 shown in connection with Fig. 5 are not necessarily true to scale, but rather are used for schematic representation. For the sake of simplicity, Fig. 6 shows a simple, if not schematic, pipe system which may of course be more complex and sophisticated, and comprise for example several branches, loads, feeders and so on.

As to advantages of the plastic pipes 1 and pipe system shown in connection with Fig. 6, reference is made to the description above.

It shall be noted, that a similar pipe system can be used for non-vacuum sewage or waste-water lines, in connection with aircraft galleys for example, for aircraft fresh-water lines, aircraft fuel lines, cooling liquid lines and similar. Despite the plastic pipes and pipe system in the embodiments shown and described in connection with the figures have been mainly described in connection with lines for guiding through aqueous liquids, the plastic pipes and pipe system may be used for any other liquids as mentioned throughout the specification.

### List of reference signs

- 1: plastic pipe
- 2: tubular body
- 3: pipe wall
- 4: attachment flange
- 5: end-section
- 6: cylindrical base
- 7: outer radial protrusion
- 8: inner abutment shoulder
- 9: axial abutment face
- 10: pipe fitting
- 11: sewage tank
- 12: heating element
- 13: aircraft
- 14: lavatory compartment
- 15: vacuum sewage line
- 16: axial end face

- D0: pipe wall thickness
- D1 - D5: first to fifth cross sectional dimension
- G: gap
- W1, W2: first and second width

## Claims

1. Plastic pipe comprising a tubular body adapted for guiding through a fluid having at least one of a liquid and solid phase, the tubular body comprising a pipe wall implemented in solid-material essentially made from at least one of a polyetherketone, polyetherimide, polyphenylene sulfide, polyphenylene sulfide and polyoxymethylene type plastic material, wherein the plastic pipe comprises at least one attachment flange which is attached and connected to an end-section of the tubular body which attachment flange comprises at least one outer radial protrusion.

2. Plastic pipe according to claim 1, wherein, at least in a mid-section of the tubular body, a thickness of the pipe wall lies in a range between 1.3 mm and 1.8 mm, preferably about 1.7 mm, preferably in a range between 1.4 mm and 1.6 mm, preferably about 1.5 mm.

3. Plastic pipe according to claim 2, wherein at least in the mid-section of the tubular body, the thickness of the pipe wall varies by 0.2 mm at the most.

4. Plastic pipe according to claim 1, wherein the tubular body is in the shape of a cylinder, in particular a regular cylinder, wherein a base area of the cylinder has one of a circular, elliptic and polygonal shape.

5. Plastic pipe according to claim 1, wherein the attachment flange comprises an axial, tubular section on which the at least one radial protrusion is formed and protrudes in radial direction thereof.

6. Plastic pipe according to claim 1, wherein the attachment flange is attached by adhesive bonding to a respective axial end-section, wherein the attachment flange is preferably attached in an arrangement flush with a respective axial end of the tubular body or such that an end edge of the tubular body abuts an inner abutment shoulder of the respective attachment flange.

7. Plastic pipe according to claim 1, wherein the attachment flange is attached by a welded joint to a respective axial end-section, wherein the attachment flange is preferably attached in an arrangement flush with a respective axial end of the tubular body or such that an end edge of the tubular body abuts an inner abutment shoulder of the respective attachment flange.

8. Plastic pipe according to claim 1, wherein the attachment flange is made from a similar or essentially the same, preferably the same, material as the pipe wall.

9. Plastic pipe according to claim 1, wherein the pipe wall comprises heating elements adapted for heating at least sections of the tubular body, which heating elements are at least one of attached on and embedded in the pipe wall.

10. Pipe system comprising at least one plastic pipe having a tubular body adapted for guiding through a fluid having at least one of a liquid and solid phase, the tubular body comprising a pipe wall implemented in solid-material essentially made from at least one of a polyetherketone, polyetherimide, polyphenylene sulfide and polyoxymethylene type plastic material, wherein at least one end-section of the tubular body comprises an attachment flange attached and connected thereto, which attachment flange comprises at least one outer radial protrusion, and wherein the plastic pipe at an end-section thereof and an adjacent pipe or element of the pipe system are fluid-tightly connected via the attachment flange.

11. Pipe system according to claim 10, wherein the attachment flanges are attached flush with the respective end section or such that an end edge of the tubular body abuts an inner abutment shoulder of the respective attachment flange, and wherein adjacent pipes preferably are fluid-tightly connected by pipe fittings fluid-tightly engaging respective flanges, in particular radial protrusions.

12. Pipe system according to claim 10, wherein at least in a mid-section of the tubular body of the at least one plastic pipe, a thickness of the pipe wall lies in a range between 1.3 mm and 1.8 mm, preferably between 1.4 mm and 1.6 mm, preferably amounts about 1.5 mm.

13. Pipe system according to claim 12, wherein at least in the mid-section of the tubular body, the thickness of the pipe wall varies by 0.2 mm at the most.

14. Pipe system according to claim 10, wherein the flange, in particular attachment flange, of the at least one plastic pipe is made of a similar or essentially the same, preferably the same, material as the pipe wall of the plastic pipe.

15. Pipe system according to claim 10, wherein the pipe wall of the at least one plastic pipe comprises heating elements adapted for heating at least sections of the respective tubular body, which heating elements are at least one of attached on and embedded in the pipe wall, and wherein the pipe system comprises an electronic control unit connected to the heating elements and adapted to control the operational state, in particular, heating power of the heating elements.

16. Pipe system according to claim 10, being adapted to guide through liquids, in particular fresh water, grey water, waste water, cooling liquids, fuels or other liquids in aircraft applications.

17. Aircraft comprising a pipe system with at least one plastic pipe having a tubular body adapted for guiding through a fluid having at least one of a liquid and solid phase, the tubular body comprising a pipe wall implemented in solid-material essentially made from a at least one of a polyetherketone, polyetherimide, polyphenylene sulfide and polyoxymethylene type plastic material, wherein the plastic pipe comprises at least one attachment flange which is attached and connected to an end-section of the tubular body and comprises at least one outer radial protrusion used for interconnecting with adjacent pipes, and wherein the pipe system is adapted and used for guiding through liquids, in particular fresh water, grey water, waste water, sewage, cooling liquids, fuels or other liquids.
